# FASCICULE DE BREVET EUROPEEN

(11) **EP 3 428 900 B1**
(45) Date de publication et mention de la délivrance du brevet: **25.03.2020**
(21) Numéro de dépôt: 18179572.5
(22) Date de dépôt: 25.06.2018
(51) Int. Cl.: G01C 21/34, G08G 1/0968, G05D 1/02, G07B 15/06

(54) **PROCÉDÉ ET SYSTÈME D'ASSISTANCE À LA CONDUITE D'UN VÉHICULE AUTONOME SUR UNE VOIE DE CIRCULATION AYANT DES ZONES DE PASSAGE OBLIGÉ**
LENKASSISTENZVERFAHREN UND -SYSTEM EINES AUTONOMEN FAHRZEUGS AUF EINER FAHRBAHN, DIE OBLIGATORISCHE DURCHFAHRTBEREICHE UMFASST
METHOD AND SYSTEM TO ASSIST WITH DRIVING AN AUTONOMOUS VEHICLE ON A ROADWAY HAVING FORCE PASSAGE ZONES

(30) Priorité: 12.07.2017 FR 1756609
(43) Date de publication de la demande: 16.01.2019
(73) Titulaire: PSA Automobiles SA, 78300 Poissy (FR)
(72) Inventeur: MAFRICA, Stefano, 75013 Paris 13 (FR); ATTIA, Rachid, 78000 Versailles (FR); MANDARD, Audrey, 75015 Paris 15 (FR); RIZZO, Audrey, 92150 Suresnes (FR)

(56) Documents cités:
- EP-A1- 2 930 580
- DE-A1-102014 224 073
- FR-A1- 3 007 724
- US-A1- 2010 156 672

## Description

L'invention concerne les véhicules à conduite autonome, éventuellement de type automobile, et plus précisément l'assistance à la conduite de tels véhicules.

Certains véhicules, généralement de type automobile, comprennent un dispositif d'assistance à la conduite (par exemple de type ADAS (« Advanced Driver Assistance System »)) qui est chargé de contrôler leur positionnement par rapport aux directions transversale et longitudinales (et donc par rapport à la voie de circulation empruntée) afin de permettre leur conduite de façon au moins partiellement autonome, c'est-à-dire sans que leurs conducteurs n'agissent sur leurs volants ou leurs pédales. De tels dispositifs d'assistance sont donc capables de contrôler au moins partiellement la dynamique (direction, vitesse et accélération) de leur véhicule en fonction d'informations représentatives de l'environnement de ce dernier et de sa position en cours.

Actuellement, ce type de dispositif d'assistance ne permet pas un contrôle de la conduite autonome dans certaines situations de roulage, et notamment lors du passage du véhicule au niveau d'une zone de passage obligé d'une voie de circulation, comme par exemple un péage de voie rapide ou de tunnel ou de pont ou encore de parking. Ainsi, lorsque le véhicule parvient au niveau d'une zone de passage obligé, son conducteur doit reprendre totalement son contrôle pour une question de sécurité, car son dispositif d'assistance n'est pas agencé pour contrôler le passage dans cette zone, y compris lorsqu'il s'agit d'une zone de passage obligé dite automatisée du fait qu'elle permet un passage automatique contrôlé des véhicules qui sont autorisés à passer de façon contrôlée.

Cela résulte essentiellement du fait que l'assistance à la conduite se fonde actuellement sur une analyse de l'environnement du véhicule par des moyens embarqués fondée sur la présence de marquages au sol et/ou d'une cartographie définissant les différentes zones de passage obligé d'une portion de voie de circulation (comme décrit dans le document brevet FR 3007724). Or, une telle assistance à la conduite est actuellement très difficile, voire impossible, du fait que la plupart des zones de passage obligé ne comportent pas de marquage au sol et qu'il n'existe pas de cartographie précise les définissant. En outre, il arrive très fréquemment que des zones de passage obligé soient fermées temporairement, ce qui peut aboutir à la sélection d'une zone de passage obligé fermée.

De plus, la fonction de guidage par satellites (par exemple de type GPS) qui permet de fournir la position en cours du véhicule à son dispositif d'assistance, ne fonctionne pas, ou fonctionne au mieux d'une façon imprécise qui est impropre à un guidage avec une précision de quelques centimètres, lorsque le véhicule est dans un lieu couvert (par exemple dans un parking de bâtiment ou un tunnel ou encore une station de péage munie d'un toit ou d'un auvent.

Par ailleurs, les capteurs embarqués qui fournissent des données aux moyens d'analyse du véhicule ne sont pas capables actuellement de bien détecter une barrière et un feu dans le chenal d'une zone de passage obligé, et donc ces moyens d'analyse ont de réelles difficultés à déterminer quand le passage est autorisé.

Par conséquent, le fonctionnement actuel des dispositifs d'assistance ne correspond pas à ce que les usagers attendent des véhicules à conduite autonome.

L'invention a donc notamment pour but d'améliorer la situation.

Elle propose notamment à cet effet un procédé destiné à assister à la conduite d'un véhicule sur une voie de circulation comportant une portion munie d'au moins deux zones de passage obligé, ce véhicule communiquant par voie d'ondes et ayant une conduite contrôlée de façon autonome en fonction de sa position.

Ce procédé d'assistance se caractérise par le fait qu'il comprend une étape dans laquelle, lorsque le véhicule parvient au voisinage de la portion de voie de circulation :
- on détermine une position relative de ce véhicule par rapport à un endroit prédéfini d'au moins une zone de passage obligé, puis
- on détermine pour ce véhicule une trajectoire à suivre passant par une zone de passage obligé en fonction d'informations cartographiques définissant certaines au moins des zones de passage obligé, d'informations de trafic définissant un trafic dans certaines au moins des zones de passage obligé et de cette/chaque position relative déterminée, puis
- on contrôle la conduite de ce véhicule afin qu'il suive cette trajectoire à suivre.

Ainsi, lorsque le véhicule arrive dans une portion de voie de circulation comportant des zones de passage obligé, son dispositif d'assistance à la conduite est en mesure de gérer correctement et précisément sa dynamique pendant toute la traversée d'une zone de passage obligé, sans que son conducteur ait à intervenir (au moins dans la conduite).

Le procédé d'assistance selon l'invention peut comporter d'autres caractéristiques qui peuvent être prises séparément ou en combinaison, et notamment :
- dans un premier mode de réalisation, dans son étape on peut déterminer chaque position relative du véhicule et la trajectoire à suivre dans un calculateur associé à la portion de voie de circulation, puis on peut transmettre une définition de cette trajectoire à suivre du calculateur vers le véhicule ;
- dans un deuxième mode de réalisation, dans son étape on peut déterminer chaque position relative du véhicule et des trajectoires passant respectivement par certaines au moins des zones de passage obligé dans un calculateur associé à la portion de voie de circulation, puis on peut transmettre de ce calculateur vers le véhicule des définitions de ces trajectoires déterminées, les informations cartographiques définissant certaines au moins des zones de passage obligé, les informations de trafic définissant le trafic dans certaines au moins des zones de passage obligé, et les informations de position définissant chaque position relative déterminée, puis on peut sélectionner dans le véhicule la trajectoire à suivre parmi les trajectoires déterminées, en fonction de ces informations cartographiques, informations de trafic et informations de position ;
- dans un troisième mode de réalisation, dans son étape, on peut déterminer chaque position relative du véhicule dans un calculateur associé à la portion de voie de circulation, puis on peut transmettre de ce calculateur vers le véhicule les informations cartographiques définissant certaines au moins des zones de passage obligé, les informations de trafic définissant le trafic dans certaines au moins des zones de passage obligé, et les informations de position définissant chaque position relative déterminée, puis on peut déterminer dans le véhicule la trajectoire à suivre, passant par l'une des zones de passage obligé, en fonction de ces informations cartographiques, informations de trafic et informations de position ;
- dans son étape on peut transmettre d'un calculateur, associé à la portion de voie de circulation, vers le véhicule des positions relatives successives de ce dernier par rapport à un endroit prédéfini d'au moins une zone de passage obligé, jusqu'à ce qu'il sorte de la zone de passage obligé par laquelle passe sa trajectoire à suivre, afin qu'il détermine sa position absolue en cours à partir de chaque position relative reçue et d'une position absolue de cet endroit prédéfini, contenue dans les informations cartographiques transmises ;
- dans son étape on peut déterminer dans le véhicule des positions absolues successives de ce dernier par rapport à un endroit prédéfini d'au moins une zone de passage obligé en fonction de distances déduites de données représentatives de l'environnement devant le véhicule et déterminées par des moyens d'analyse embarqués dans ce dernier, afin qu'il dispose à chaque instant de sa position absolue par rapport à une position absolue de cet endroit prédéfini, contenue dans les informations cartographiques transmises ;
- dans son étape on peut transmettre d'un calculateur, associé à la portion de voie de circulation, vers le véhicule un profil de vitesse adapté à chaque zone de passage obligé, afin que l'on contrôle la conduite du véhicule sur sa trajectoire à suivre en respectant le profil de vitesse adapté à la zone de passage obligé par laquelle passe cette trajectoire à suivre ;
- dans son étape on peut transmettre au véhicule des données d'état signalant si son passage automatique est autorisé ou non autorisé, afin que l'on contrôle la vitesse du véhicule sur sa trajectoire à suivre en fonction de ces données d'état et d'une position d'une cible virtuelle située dans la zone de passage obligé par laquelle passe la trajectoire à suivre, le véhicule demeurant à l'arrêt juste avant cette position de cette cible virtuelle tant que ces données d'état transmises ne sont pas représentatives d'une autorisation ;
- dans son étape les transmissions peuvent être directes et à courte portée ou bien réalisées via un réseau de communication mobile ;
- chaque zone de passage obligé peut, par exemple, comprendre une station de péage.

L'invention propose également un système destiné à mettre en œuvre le procédé d'assistance présenté ci-avant et comprenant à cet effet au moins un calculateur et un premier module de communication, installés dans une portion de voie de circulation comprenant au moins deux zones de passage obligé, et au moins un véhicule présent dans cette portion et comportant un dispositif d'assistance coopérant avec ce calculateur pour contrôler la conduite de son véhicule lors du passage dans une zone de passage obligé.

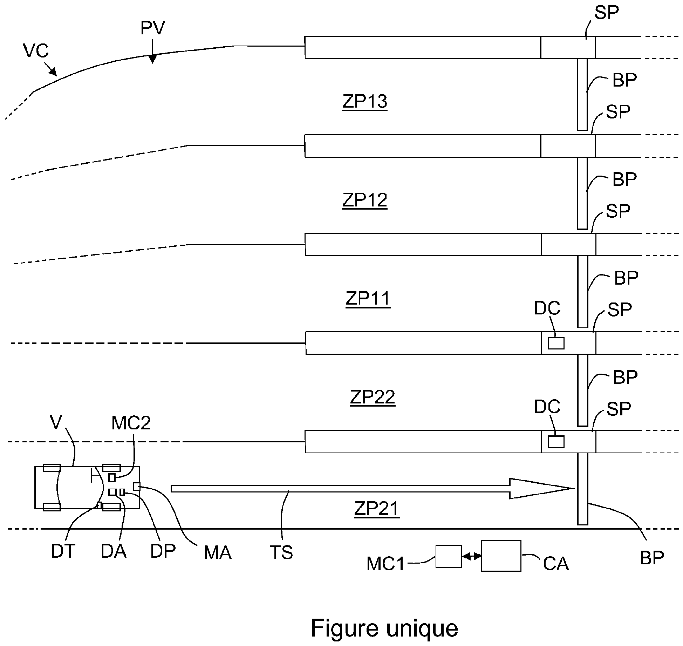

D'autres caractéristiques et avantages de l'invention apparaîtront à l'examen de la description détaillée ci-après, et du dessin annexé, sur lequel l'unique figure illustre schématiquement et fonctionnellement une voie de circulation comprenant une portion comportant des zones de passage obligé dans l'une desquelles s'apprête à circuler un véhicule autorisé à emprunter une zone automatisée et pouvant bénéficier du procédé d'assistance selon l'invention.

L'invention a notamment pour but de proposer un procédé d'assistance destiné à assister (ou aider) à la conduite d'un véhicule V à conduite autonome lors d'un passage dans une zone de passage obligé ZP1j ou ZP2k d'une portion PV d'une voie de circulation VC comprenant en outre au moins une autre zone de passage obligé ZP1j ou ZP2k, éventuellement automatisée.

Dans ce qui suit, on considère, à titre d'exemple non limitatif, que le véhicule V est de type automobile. Il s'agit par exemple d'une voiture. Mais l'invention n'est pas limitée à ce type de véhicule. Elle concerne en effet tout type de véhicule terrestre pouvant effectuer des déplacements et des manœuvres sur des voies de circulation comprenant des zones de passage obligé. Ainsi, elle concerne également les motocyclettes, les autocars (ou bus), les camions, les véhicules utilitaires, et les engins de voirie.

Par ailleurs, on considère dans ce qui suit, à titre d'exemple non limitatif, que la portion PV de voie de circulation VC à zones de passage obligé ZP1j et ZP2k est une zone de péage d'une autoroute. Mais l'invention n'est pas limitée à ce type de zone de passage obligé. Elle concerne en effet tout type de zone de passage obligé faisant partie d'une portion d'une voie de circulation, qu'elle comprenne ou non une barrière de péage. Ainsi, elle concerne notamment les voies rapides, les tunnels, les ponts, les parkings (extérieurs ou intérieurs), les entrées de ville ou de sous-parties de villes (comme par exemple des centres-villes), et les zones aéroportuaires. On notera que l'invention concerne non seulement les zones de passage obligé dans lesquelles un échange de données par voie d'ondes est effectué entre un poste de contrôle local et un dispositif de télépéage (ou badge) DT embarqué dans le véhicule V, mais également les zones de passage obligé dans lesquelles l'immatriculation du véhicule V est enregistrée, par exemple au moyen de caméra(s), sans que cela nécessite que le véhicule comprenne un dispositif de télépéage (ou badge) DT.

On a schématiquement représenté sur l'unique figure une portion PV d'une voie de circulation VC comprenant cinq zones de passage obligé ZP1j et ZP2k propres à être traversées par des véhicules. Ici, la portion PV comprend trois zones de passage obligé ZP11 à ZP13 (j = 1 à 3) n'autorisant pas un passage automatique contrôlé et donc dites non automatisées, et deux zones de passage obligé ZP21 et ZP22 (k = 1 et 2) autorisant un passage automatique contrôlé et donc dites automatisées. On notera que pour que l'invention puisse être mise en œuvre, il faut que la portion PV de la voie de circulation VC comprennent au moins deux zones de passage obligé, dont au moins une est automatisée (ZP2k).

Chaque zone non automatisée ZP1j comprend une station de péage SP placé sur un côté d'un chenal dans lequel peuvent circuler des véhicules et dont le passage est éventuellement entravé par une barrière BP montée à rotation.

Chaque zone automatisée ZP2k comprend une station de péage SP, munie d'un dispositif de contrôle DC chargé de contrôler le passage de chaque véhicule, et placé sur un côté d'un chenal dans lequel peuvent circuler des véhicules, équipés (ici) d'un dispositif de télépéage DT, et dont le passage est éventuellement entravé par une barrière BP montée à rotation.

Chaque dispositif de contrôle DC est (ici) agencé de manière à échanger des données par voie d'ondes (à courte portée) avec un dispositif de télépéage DT embarqué dans un véhicule V.

Comme mentionné plus haut, l'invention concerne plus précisément les véhicules V équipés d'un dispositif d'assistance à la conduite DA chargé de contrôler leur positionnement par rapport aux directions transversale et longitudinales (et donc par rapport à la voie de circulation VC) afin de permettre leur conduite de façon au moins partiellement autonome, c'est-à-dire sans que leurs conducteurs n'agissent sur leurs volants ou leurs pédales. Par exemple, ce dispositif d'assistance (à la conduite) DA est de type ADAS (Advanced Driver Assistance System).

Ce dispositif d'assistance DA contrôle la conduite en fonction, notamment, de la position en cours de son véhicule V et d'informations fournies par des moyens d'analyse MA embarqués dans le véhicule V et chargés d'analyser des données représentatives de l'environnement devant le véhicule V, acquises par des moyens d'acquisition également embarqués dans le véhicule V. Ces moyens d'acquisition peuvent, par exemple, comprendre au moins une caméra et/ou au moins un laser de balayage et/ou au moins un radar ou lidar et/ou au moins un capteur d'ultrasons.

Egalement comme mentionné plus haut, l'invention propose un procédé d'assistance destiné à assister (ou aider) à la conduite d'un véhicule V (à conduite autonome) lors d'un passage dans une zone de passage obligé ZP1j ou ZP2k d'une portion PV d'une voie de circulation VC.

La mise en œuvre de ce procédé d'assistance nécessite que la portion PV soit en outre équipée d'au moins un calculateur CA et d'au moins un premier module de communication par voie d'ondes MC1, et que le véhicule V comprenne en outre un second module de communication par voie d'ondes MC2 (propre à échanger des messages avec le premier module de communication par voie d'ondes MC1) et un dispositif de positionnement DP, par exemple par satellites, et propre, au moins, à déterminer sa position en cours. Les transmissions entre les premier MC1 et second MC2 modules de communication par voie d'ondes sont de préférence directes et à courte portée (éventuellement de type « véhicule à infrastructure » (Car2X ou V2X, par exemple)). Mais ces transmissions pourraient être réalisées via un réseau de communication mobile.

Le procédé d'assistance, selon l'invention, comprend une étape qui est mise en œuvre chaque fois qu'un véhicule V (autorisé et à conduite autonome) parvient au voisinage de la portion PV de la voie de circulation VC. Dans ce cas, on commence par déterminer une position relative prv de ce véhicule V par rapport à un endroit prédéfini d'au moins une zone de passage obligé ZP1j ou ZP2k. Cette détermination peut, par exemple, être réalisée par le calculateur CA au moyen de données fournies par des détecteurs implantés dans le sol et/ou des rambardes de sécurité ou des murs de la portion PV et/ou par des caméras ou des lasers ou des radars ou des détecteurs à ultrasons implanté(e)s sur au moins un côté de la portion PV. Par exemple et non limitativement, le calculateur CA peut déterminer la position relative prv du véhicule V par rapport à un endroit prédéfini de la première zone automatisée ZP21. Ainsi, même lorsque le véhicule V n'est pas détecté par les détecteurs de la portion PV, il pourra toujours utiliser la mesure de sa position effectuée par son dispositif de positionnement DP (éventuellement de type différentiel). En variante, on pourrait transmettre au véhicule V sa position dans un référentiel local (par exemple par rapport au calculateur CA) sans passer par des coordonnées géographiques (absolues), et lorsque le véhicule V n'est pas détecté par les détecteurs de la portion PV il pourra estimer sa position par odométrie ou SLAM (« Simultaneous Localization and Mapping ») en utilisant la perception de son environnement local fournie par ses moyens d'analyse MA. Cet endroit prédéfini peut, par exemple et non limitativement, être l'endroit où est installée (ici) la station de péage SP de la première zone de passage obligé ZP21. Mais le calculateur CA pourrait déterminer la position relative prv du véhicule V par rapport à un endroit prédéfini de chaque zone de passage obligé ZP1j ou ZP2k ou seulement de chaque zone automatisée ZP2k (lorsque le véhicule V comprend un dispositif de télépéage DT (ou analogue)). On comprendra que le calculateur CA dispose des coordonnées géographiques définissant les positions absolues des zones de passage obligé ZP1j et ZP2k, et donc qu'il est capable d'en déduire la position relative en cours prv d'un véhicule V, détecté dans la portion PV, par rapport à au moins un endroit prédéfini de cette portion PV.

Puis, on détermine pour le véhicule V une trajectoire à suivre TS passant par une zone de passage obligé ZP1j ou ZP2k en fonction d'informations cartographiques définissant certaines au moins des zones de passage obligé ZP1j et ZP2k, d'informations de trafic définissant un trafic dans certaines au moins des zones de passage obligé ZP1j et ZP2k et de la/chaque position relative prv déterminée. On verra plus loin que cette détermination de la trajectoire à suivre TS peut se faire de différentes manières, dans le calculateur CA ou dans le véhicule V.

On notera que lorsque le véhicule V comprend un dispositif de télépéage DT (ou analogue), on peut éventuellement déterminer pour le véhicule V une trajectoire à suivre TS passant par une zone automatisée ZP2k en fonction d'informations cartographiques et de trafic relatives aux seules zones automatisées ZP2k.

Puis, on contrôle la conduite du véhicule V, au moyen de son dispositif d'assistance DA, afin qu'il suive cette trajectoire à suivre TS.

La trajectoire à suivre TS étant définie de façon très précise et le dispositif d'assistance DA disposant d'informations de position très précises, tant relatives à son véhicule V qu'à la zone de passage obligé ZP1j ou ZP2k que son véhicule V doit traverser, ce dispositif d'assistance DA est donc avantageusement en mesure de gérer correctement et précisément la dynamique de son véhicule V pendant toute la traversée de cette zone de passage obligé ZP1j ou ZP2k, sans que son conducteur ait à intervenir (au moins pour la conduite). En outre, on est désormais certain que la trajectoire à suivre TS sera déterminée en fonction des seules zones de passage obligé ZP1j et ZP2k (éventuellement seulement celles automatisées ZP2k) qui sont effectivement ouvertes et non défaillantes, ce qui n'est connu à chaque instant que par le calculateur CA.

La trajectoire à suivre TS est par exemple celle qui permet, a priori, de perdre le minimum de temps lors du passage automatique contrôlé, compte tenu du trafic dans chaque zone de passage obligé ZP1j ou ZP2k (éventuellement seulement celles automatisées ZP2k) et de la position relative prv du véhicule V lorsqu'il est détecté pour la première fois dans la portion PV. Mais elle pourrait également être la trajectoire la plus courte ou la plus sûr ou encore la plus apte à la conduite autonome.

Dans l'exemple illustré non limitativement sur l'unique figure, compte tenu du trafic nul dans chaque zone automatisée ZP2k et du fait que le véhicule V comprend un dispositif de télépéage DT et a été détecté dans la partie la plus à droite de la portion PV, située dans l'axe du chenal de la première zone automatisée ZP21 (k = 1), la trajectoire à suivre TS passe par cette première zone automatisée ZP21.

Au moins trois modes de réalisation peuvent être envisagés pour déterminer la trajectoire à suivre TS du véhicule V pour passer par une zone de passage obligé ZP1j ou ZP2k.

Dans un premier mode de réalisation, dans l'étape du procédé on peut déterminer chaque position relative prv du véhicule V et la trajectoire à suivre TS dans le calculateur CA qui est associé à la portion PV. Dans ce cas, on transmet ensuite la définition de cette trajectoire à suivre TS du calculateur CA vers le véhicule V. On comprendra que le calculateur CA ordonne au premier module de communication (par voie d'ondes) MC1 de transmettre un message contenant une définition de cette trajectoire à suivre TS au second module de communication (par voie d'ondes) MC2 du véhicule V, et ce second module de communication MC2 transmet cette définition au dispositif d'assistance DA de son véhicule V pour qu'il contrôle sa conduite afin de lui faire suivre la trajectoire à suivre TS définie.

L'identification du véhicule V et de son identifiant de communication peut se faire d'au moins deux manières.

Dans une première manière, on peut déterminer le numéro d'immatriculation du véhicule V au moyen d'images acquises par des caméras de la portion PV, puis le calculateur CA recherche l'identifiant de communication qui est associé à ce numéro d'immatriculation dans un fichier d'abonnés.

Dans une seconde manière, le véhicule V peut se connecter automatiquement aux premiers moyens de communication MC1 (ici) de la zone de péage en connaissant son identifiant de communication (par exemple son adresse IP), puis il peut transmettre sa propre position géographique (fournie par son propre dispositif de positionnement DP). Ainsi, les premiers moyens de communication MC1 peuvent l'identifier parmi tous les véhicules en approche. Il faut préciser que cette solution de communication de type « unicast » n'est nécessaire que si l'on veut envoyer depuis la zone de péage une trajectoire à suivre TS et/ou la position du véhicule V.

Dans un deuxième mode de réalisation, dans l'étape du procédé on peut commencer par déterminer chaque position relative prv du véhicule V et des trajectoires passant respectivement par certaines au moins des zones de passage obligé ZP1k et ZP2k (éventuellement seulement celles automatisées ZP2k) dans le calculateur CA qui est associé à la portion PV. Dans ce cas, on peut ensuite transmettre du calculateur CA vers le véhicule V des définitions de ces trajectoires déterminées, les informations cartographiques définissant certaines au moins des zones de passage obligé ZP1k et ZP2k (éventuellement seulement celles automatisées ZP2k), les informations de trafic définissant le trafic dans certaines au moins des zones de passage obligé ZP1k et ZP2k (éventuellement seulement celles automatisées ZP2k), et les informations de position définissant chaque position relative prv déterminée. On comprendra que le calculateur CA ordonne au premier module de communication MC1 de transmettre un message contenant les définitions des trajectoires et les informations précitées au second module de communication MC2 du véhicule V.

Puis, on peut sélectionner dans le véhicule V la trajectoire à suivre TS parmi ces trajectoires déterminées (reçues), en fonction de ces informations cartographiques, informations de trafic et informations de position reçues. Cette sélection peut, par exemple, être réalisée par le dispositif d'assistance DA du véhicule V, lequel va ensuite contrôler la conduite de ce dernier (V) afin de lui faire suivre la trajectoire à suivre TS qu'il vient de sélectionner. Mais dans une variante on pourrait envisager que le véhicule V comprenne un dispositif de sélection, externe au dispositif d'assistance DA tout en étant couplé à ce dernier (DA), et chargé de sélectionner la trajectoire à suivre TS parmi les trajectoires déterminées reçues.

Dans ce deuxième mode de réalisation, l'identification du véhicule V et de son identifiant de communication n'est pas obligatoire. On peut en effet envisager que le calculateur CA envoie à tous les véhicules (mode « broadcast » - diffusion) un ensemble de trajectoires menant à chacune des zones de passage obligé ZP1k et ZP2k (éventuellement seulement celles automatisées ZP2k), ainsi que des corrections de position (par exemple GPS) pour améliorer le positionnement des véhicules aux alentours, et ensuite le dispositif d'assistance DA (ou le dispositif de sélection précité) de chaque véhicule choisit sa propre trajectoire à suivre parmi cet ensemble.

Dans un troisième mode de réalisation, dans l'étape du procédé on peut commencer par déterminer chaque position relative prv du véhicule V dans le calculateur CA qui est associé à la portion PV. Dans ce cas, on peut ensuite transmettre du calculateur CA vers le véhicule V les informations cartographiques définissant certaines au moins des zones de passage obligé ZP1k et ZP2k (éventuellement seulement celles automatisées ZP2k), les informations de trafic définissant le trafic dans certaines au moins des zones de passage obligé ZP1k et ZP2k (éventuellement seulement celles automatisées ZP2k), et les informations de position définissant chaque position relative prv déterminée. On comprendra que le calculateur CA ordonne au premier module de communication MC1 de transmettre un message contenant les informations précitées au second module de communication MC2 du véhicule V.

Puis, on peut déterminer dans le véhicule V la trajectoire à suivre TS, qui passe par l'une des zones de passage obligé ZP1k et ZP2k (éventuellement seulement celles automatisées ZP2k), en fonction de ces informations cartographiques, informations de trafic et informations de position reçues. Cette détermination peut, par exemple, être réalisée par le dispositif d'assistance DA du véhicule V, lequel va ensuite contrôler la conduite de ce dernier (V) afin de lui faire suivre la trajectoire à suivre TS qu'il vient de sélectionner. Mais dans une variante on pourrait envisager que le véhicule V comprenne un dispositif de calcul, externe au dispositif d'assistance DA tout en étant couplé à ce dernier (DA), et chargé de déterminer la trajectoire à suivre TS en fonction des informations reçues.

On notera que dans l'étape du procédé on peut transmettre du calculateur CA, associé à la portion PV, vers le véhicule V des positions relatives prv successives de ce dernier (V) par rapport à un endroit prédéfini d'au moins une zone de passage obligé ZP1j ou ZP2k, jusqu'à ce qu'il sorte de la zone de passage obligé ZP1k ou ZP2k par laquelle passe la trajectoire à suivre TS. On comprendra que le calculateur CA ordonne au premier module de communication MC1 de transmettre des messages successifs contenant respectivement les positions relatives prv successives du véhicule V au second module de communication MC2 de ce dernier (V).

Ainsi, on peut déterminer dans le véhicule V sa position absolue en cours à partir de chaque position relative prv reçue et d'une position absolue de l'endroit prédéfini, contenue dans les informations cartographiques. On notera que dans le cas du premier mode de réalisation décrit ci-avant, cette option nécessite que le calculateur CA ordonne au premier module de communication MC1 de transmettre également un message contenant les informations cartographiques précitées au second module de communication MC2 du véhicule V. Ce message peut également comprendre la toute première position relative prv du véhicule V déterminée. Par ailleurs, la détermination de chaque position absolue peut, par exemple, être réalisée par le dispositif d'assistance DA du véhicule V, lequel va ensuite contrôler la conduite de ce dernier (V) en fonction de cette position absolue déterminée, afin de lui faire suivre la trajectoire à suivre TS. Mais dans une variante on pourrait envisager que le véhicule V comprenne un dispositif de calcul, externe au dispositif d'assistance DA tout en étant couplé à ce dernier (DA), et chargé de déterminer chaque position absolue.

Cette dernière option permet d'éviter d'avoir à utiliser des positions en cours du véhicule V fournies par son dispositif de positionnement DP, lesquelles sont a priori insuffisamment précises et donc non fiables.

On notera également que dans l'étape du procédé on peut déterminer dans le véhicule V des positions absolues successives de ce dernier (V) par rapport à un endroit prédéfini d'au moins une zone de passage obligé ZP1j ou ZP2k en fonction de distances déduites de données représentatives de l'environnement devant le véhicule V et déterminées par les moyens d'analyse MA embarqués dans ce dernier (V).

Ainsi, le véhicule V, et plus précisément son dispositif d'assistance DA, dispose à chaque instant de sa position absolue par rapport à une position absolue de cet endroit prédéfini, contenue dans les informations cartographiques. On notera que dans le cas du premier mode de réalisation décrit ci-avant, cette option nécessite que le calculateur CA ordonne au premier module de communication MC1 de transmettre des messages successifs contenant respectivement les positions absolues successives du véhicule V au second module de communication MC2 de ce dernier (V).

Cette dernière option permet d'éviter d'avoir à utiliser des positions en cours du véhicule V fournies par son dispositif de positionnement DP, lesquelles sont a priori insuffisamment précises et donc non fiables.

On notera également que dans l'étape du procédé on peut transmettre du calculateur CA, associé à la portion PV, vers le véhicule V un profil de vitesse adapté à chaque zone de passage obligé ZP1k ou ZP2k (éventuellement seulement celles automatisées ZP2k), afin que l'on contrôle la conduite du véhicule V sur la trajectoire à suivre TS en respectant le profil de vitesse qui est adapté à la zone de passage obligé ZP1k ou ZP2k par laquelle passe cette trajectoire à suivre TS. On comprendra que le calculateur CA ordonne au premier module de communication MC1 de transmettre un message contenant le/chaque profil de vitesse adapté aux/à chaque zone(s) de passage obligé ZP1k ou ZP2k au second module de communication MC2 du véhicule V, et ce second module de communication MC2 transmet le/chaque profil de vitesse adapté aux/à chaque zone(s) de passage obligé ZP1k ou ZP2k au dispositif d'assistance DA de son véhicule V pour qu'il contrôle sa conduite afin de lui faire suivre la trajectoire à suivre TS définie en respectant le profil de vitesse concerné.

Chaque profil de vitesse peut, par exemple, être une loi de vitesse décroissante, éventuellement fonction du trafic dans la zone de passage obligé ZP1k ou ZP2k, et/ou des conditions/contraintes météorologiques, et/ou de la pollution locale, et/ou du type ou de la dynamique du véhicule (pour une question de sécurité et/ou de confort.

On notera également que dans l'étape du procédé on peut transmettre au véhicule V des données d'état signalant si le passage automatique est autorisé ou non autorisé (ici par le dispositif de contrôle DC de la station de péage SP concernée). Par exemple, le calculateur CA peut être informé par ce dispositif de contrôle DC de l'état autorisé ou non autorisé, et peut ordonner au premier module de communication MC1 de transmettre des messages successifs contenant les données d'état définissant l'état en cours au second module de communication MC2 du véhicule V, et ce second module de communication MC2 transmet ces données d'état au dispositif d'assistance DA de son véhicule V. En variante, le dispositif de contrôle DC concerné peut adresser au dispositif de télépéage DT du véhicule V les données d'état successives, et ce dispositif de télépéage DT peut transmettre ces données d'état au dispositif d'assistance DA de son véhicule V.

Ainsi, on (le dispositif d'assistance DA) peut contrôler la vitesse du véhicule V sur la trajectoire à suivre TS en fonction de ces données d'état et d'une position d'une cible virtuelle située dans la zone de passage obligé ZP1k ou ZP2k par laquelle passe la trajectoire à suivre TS. Le véhicule V demeure à l'arrêt juste avant cette position de la cible virtuelle tant que les données d'état ne sont pas représentatives d'une autorisation de passage générée par le dispositif de contrôle DC concerné. La cible virtuelle peut, par exemple, être (ici) la barrière BP de la zone de passage obligé ZP1k ou ZP2k. Mais lorsqu'un autre véhicule précède le véhicule V dans la zone de passage obligé ZP1k ou ZP2k, cette cible virtuelle peut être la partie arrière de cet autre véhicule. On notera que la position de la cible virtuelle de la zone de passage obligé ZP1k ou ZP2k (par exemple la barrière BP) peut être transmise du calculateur CA, associé à la portion PV, vers le véhicule V, au moyen d'un message dédié ou bien d'un message contenant au moins une position (relative ou absolue) et/ou des informations parmi celles précitées. Dans le cas d'une transmission en mode broadcast, on peut, par exemple, envoyer à tous les véhicules un ensemble de trajectoires et des informations sur certaines au moins des zones de passage obligé ZP1k et ZP2k (éventuellement seulement celles automatisées ZP2k) ouvertes et fermées, et donc chaque véhicule V est capable de comprendre si l'autorisation de passage le concerne ou s'il concerne un autre véhicule situé devant lui dans la même zone de passage obligé ZP1k ou ZP2k grâce à l'analyse effectuée par ses moyens d'analyse MA.

Cette dernière option permet d'éviter d'avoir à attendre des moyens d'analyse MA une information signalant la détection de l'autorisation de passage suite à la détection de la remontée de la barrière BP de la zone de passage obligé ZP1k ou ZP2k concernée et/ou le passage à la couleur verte du feu de cette zone de passage obligé ZP1k ou ZP2k, ce qui s'avère assez souvent difficile à détecter compte tenu, notamment, de leur grande proximité des moyens d'acquisition du véhicule V ou du fait qu'il s'agit d'objets non reconnaissables dans la base de données des objets appris par le véhicule V (par exemple du fait d'une forme et/ou de couleurs spécifiques (ici) à la zone de péage).

On notera également que le passage via une zone automatisée ZP2k se fait, a priori, sans aucune intervention du conducteur du véhicule V puisque le dispositif de télépéage DT coopère avec le dispositif de contrôle DC (ici) de la station de péage SP. Mais lorsque le passage se fait via une zone non automatisée ZP1j, le conducteur du véhicule autonome doit payer ou présenter une carte de passage une fois son véhicule arrêté au niveau de la station SP, et une fois qu'il a fait cette dernière opération, le calculateur CA transmet à son véhicule V les données d'état signalant l'autorisation afin que le dispositif d'assistance DA fasse repartir le véhicule.

Le dispositif d'assistance DA peut être avantageusement modifié, par rapport à un dispositif d'assistance de l'art antérieur, afin de prendre en compte les positions (relatives ou absolues) précitées et/ou les informations précitées et/ou les définitions de trajectoire précitées et/ou les éventuels profils de vitesse précités et/ou les éventuelles données d'état précitées. Cette modification peut se faire par modification et/ou ajout de module(s) logiciel(s) (ou informatiques ou encore « software ») et/ou par modification et/ou ajout de circuits électroniques (ou « hardware »).

On notera également que l'invention propose aussi un système, destiné à mettre en œuvre le procédé d'assistance décrit ci-avant, et comprenant :
- au moins un calculateur CA et un premier module de communication MC1, installés dans une portion PV d'une voie de circulation VC comprenant au moins deux zones de passage obligé ZP1j et ZP2k, et
- au moins un véhicule V présent dans cette portion PV et comportant un dispositif d'assistance DA coopérant avec ce calculateur CA pour contrôler la conduite de son véhicule V lors de son passage dans une zone de passage obligé ZP1j ou ZP2k.

## Revendications

1. Procédé d'assistance à la conduite d'un véhicule (V) sur une voie de circulation (VC) comportant une portion (PV) munie d'au moins deux zones de passage obligé (ZP1j, ZP2k), ledit véhicule (V) communiquant par voie d'ondes et ayant une conduite contrôlée de façon autonome en fonction de sa position, **caractérisé en ce qu'**il comprend une étape dans laquelle, lorsque ledit véhicule (V) parvient au voisinage de ladite portion (PV), on détermine une position relative dudit véhicule (V) par rapport à un endroit prédéfini d'une zone de passage obligé (ZP1j, ZP2k), puis on détermine pour ledit véhicule (V) une trajectoire à suivre passant par une zone de passage obligé_(ZP1j, ZP2k) en fonction d'informations cartographiques définissant certaines des zones de passage obligé (ZP2k), d'informations de trafic définissant un trafic dans certaines des zones de passage obligé (ZP1j, ZP2k) et de ladite position relative déterminée, puis on contrôle la conduite dudit véhicule (V) afin qu'il suive cette trajectoire à suivre.

2. Procédé selon la revendication 1, **caractérisé en ce que** dans ladite étape on détermine chaque position relative dudit véhicule (V) et ladite trajectoire à suivre dans un calculateur (CA) associé à ladite portion (PV), puis on transmet ladite définition de cette trajectoire à suivre dudit calculateur (CA) vers ledit véhicule (V).

3. Procédé selon la revendication 1, **caractérisé en ce que** dans ladite étape on détermine chaque position relative dudit véhicule (V) et des trajectoires passant respectivement par certaines des zones de passage obligé (ZP1j, ZP2k) dans un calculateur (CA) associé à ladite portion (PV), puis on transmet dudit calculateur (CA) vers ledit véhicule (V) des définitions de ces trajectoires déterminées, lesdites informations cartographiques définissant certaines des zones de passage obligé (ZP1j, ZP2k), lesdites informations de trafic définissant le trafic dans certaines des zones de passage obligé (ZP1j, ZP2k), et lesdites informations de position définissant chaque position relative déterminée, puis on sélectionne dans ledit véhicule (V) ladite trajectoire à suivre parmi lesdites trajectoires déterminées, en fonction desdites informations cartographiques, desdites informations de trafic et desdites informations de position.

4. Procédé selon la revendication 1, **caractérisé en ce que** dans ladite étape on détermine chaque position relative dudit véhicule (V) dans un calculateur (CA) associé à ladite portion (PV), puis on transmet dudit calculateur (CA) vers ledit véhicule (V) lesdites informations cartographiques définissant certaines des zones de passage obligé (ZP1j, ZP2k), lesdites informations de trafic définissant le trafic dans certaines des zones de passage obligé (ZP1j, ZP2k), et lesdites informations de position définissant chaque position relative déterminée, puis on détermine dans ledit véhicule (V) ladite trajectoire à suivre, passant par l'une desdites zones de passage obligé (ZP1j, ZP2k), en fonction desdites informations cartographiques, desdites informations de trafic et desdites informations de position.

5. Procédé selon l'une des revendications 1 à 4, **caractérisé en ce que** dans ladite étape on transmet d'un calculateur (CA), associé à ladite portion (PV), vers ledit véhicule (V) des positions relatives successives de ce dernier (V) par rapport à un endroit prédéfini d'une zone de passage obligé (ZP1j, ZP2k), jusqu'à ce qu'il sorte de la zone de passage obligé (ZP1j, ZP2k) par laquelle passe ladite trajectoire à suivre, afin qu'il détermine sa position absolue en cours à partir de chaque position relative reçue et d'une position absolue dudit endroit prédéfini, contenue dans lesdites informations cartographiques.

6. Procédé selon l'une des revendications 1 à 5, **caractérisé en ce que** dans ladite étape on détermine dans ledit véhicule (V) des positions absolues successives de ce dernier (V) par rapport à un endroit prédéfini d'une zone de passage obligé (ZP1j, ZP2k) en fonction de distances déduites de données représentatives de l'environnement devant ledit véhicule (V) et déterminées par des moyens d'analyse (MA) embarqués dans ce dernier (V), afin qu'il dispose à chaque instant de sa position absolue par rapport à une position absolue dudit endroit prédéfini, contenue dans lesdites informations cartographiques.

7. Procédé selon l'une des revendications 1 à 6, **caractérisé en ce que** dans ladite étape on transmet d'un calculateur (CA), associé à ladite portion (PV), vers ledit véhicule (V) un profil de vitesse adapté à chaque zone de passage obligé (ZP1j, ZP2k), afin que l'on contrôle la conduite dudit véhicule (V) sur ladite trajectoire à suivre en respectant le profil de vitesse adapté à la zone de passage obligé (ZP1j, ZP2k) par laquelle passe cette trajectoire à suivre.

8. Procédé selon l'une des revendications 1 à 7, **caractérisé en ce que** dans ladite étape on transmet audit véhicule (V) des données d'état signalant si ledit passage automatique est autorisé ou non autorisé, afin que l'on contrôle la vitesse dudit véhicule (V) sur ladite trajectoire à suivre en fonction de ces données d'état et d'une position d'une cible virtuelle située dans la zone de passage obligé (ZP1j, ZP2k) par laquelle passe ladite trajectoire à suivre, ledit véhicule (V) demeurant à l'arrêt juste avant cette position de ladite cible virtuelle tant que lesdites données d'état ne sont pas représentatives d'une autorisation.

9. Procédé selon l'une des revendications 1 à 8, **caractérisé en ce que** chaque zone de passage obligé (ZP1j, ZP2k) comprend une station de péage.

10. Système, **caractérisé en ce qu'**il est destiné à mettre en œuvre un procédé d'assistance selon l'une des revendications précédentes, et qu'il comprend au moins un calculateur (CA) et un premier module de communication (MC1), installés dans une portion (PV) d'une voie de circulation (VC) comprenant au moins deux zones de passage obligé (ZP1j, ZP2k), et au moins un véhicule (V) présent dans ladite portion (PV) et comportant un dispositif d'assistance (DA) coopérant avec ledit calculateur (CA) pour contrôler la conduite dudit véhicule (V) lors de son passage dans une zone de passage obligé (ZP1j, ZP2k).

## Patentansprüche

1. Lenkassistenzverfahren eines Fahrzeugs (V) auf einer Fahrbahn (VC), die einen Abschnitt (PV) umfasst, der mit mindestens zwei obligatorischen Durchfahrtbereichen (ZP1j, ZP2k) versehen ist, wobei das Fahrzeug (V) über Wellen kommuniziert und ein autonom gesteuertes Lenken in Abhängigkeit von seiner Position aufweist, **dadurch gekennzeichnet, dass** es einen Schritt umfasst, bei dem, wenn das Fahrzeug (V) in der Nähe des Abschnitts (PV) ankommt, eine relative Position des Fahrzeugs (V) in Bezug auf eine vordefinierte Stelle eines obligatorischen Durchfahrtbereichs (ZP1j, ZP2k) bestimmt wird, dann für das Fahrzeug (V) eine zu verfolgende Bahn, die durch einen obligatorischen Durchfahrtbereich (ZP1j, ZP2k) durchgeht, in Abhängigkeit von kartographischen Informationen, die bestimmte der obligatorischen Durchfahrtbereiche (ZP2k) definieren, von Verkehrsinformationen, die einen Verkehr in bestimmten der obligatorischen Durchfahrtbereiche (ZP1j, ZP2k) definieren, und von der bestimmten relativen Position bestimmt wird, dann das Lenken des Fahrzeugs (V) gesteuert wird, damit es dieser zu befolgende Bahn folgt.

2. Verfahren nach Anspruch 1, **dadurch gekennzeichnet, dass** bei dem Schritt jede relative Position des Fahrzeugs (V) und die zu befolgende Bahn in einem Rechner (CA), der mit dem Abschnitt (PV) assoziiert ist, bestimmt werden, dann die Definition dieser zu befolgenden Bahn von dem Rechner (CA) zu dem Fahrzeug (V) übertragen wird.

3. Verfahren nach Anspruch 1, **dadurch gekennzeichnet, dass** bei dem Schritt jede relative Position des Fahrzeugs (V) und Bahnen, die jeweils durch bestimmte der obligatorischen Durchfahrtbereiche (ZP1j, ZP2k) durchgehen, in einem Rechner (CA), der mit dem Abschnitt (PV) assoziiert ist, bestimmt werden, dann Definitionen dieser bestimmten Bahnen von dem Rechner (CA) zu dem Fahrzeug (V) übertragen werden, wobei die kartographischen Informationen bestimmte der obligatorischen Durchfahrtbereiche (ZP1j, ZP2k) definieren, wobei die Verkehrsinformationen den Verkehr in bestimmten der obligatorischen Durchfahrtbereiche (ZP1j, ZP2k) definieren, und die Positionsinformationen jede bestimmte relative Position definieren, dann in dem Fahrzeug (V) die zu befolgende Bahn aus den bestimmten Bahnen in Abhängigkeit von den kartographischen Informationen, den Verkehrsinformationen und den Positionsinformationen ausgewählt wird.

4. Verfahren nach Anspruch 1, **dadurch gekennzeichnet, dass** bei dem Schritt jede relative Position des Fahrzeugs (V) in einem Rechner (CA), der mit dem Abschnitt (PV) assoziiert ist, bestimmt wird, dann die kartographischen Informationen, die bestimmte der obligatorischen Durchfahrtbereiche (ZP1j, ZP2k) definieren, von dem Rechner (CA) zu dem Fahrzeug (V) übertragen werden, wobei die Verkehrsinformationen den Verkehr in bestimmten der obligatorischen Durchfahrtbereiche (ZP1j, ZP2k) definieren, und die Positionsinformationen jede bestimmte relative Position definieren, dann in dem Fahrzeug (V) die zu befolgende Bahn, die in einem der obligatorischen Durchfahrtbereiche (ZP1j, ZP2k) durchgeht, in Abhängigkeit von den kartographischen Informationen, den Verkehrsinformationen und den Positionsinformationen bestimmt wird.

5. Verfahren nach einem der Ansprüche 1 bis 4, **dadurch gekennzeichnet, dass** bei dem Schritt von einem Rechner (CA), der mit dem Abschnitt (PV) assoziiert ist, zu dem Fahrzeug (V) aufeinanderfolgende relative Positionen dieses Letzteren (V) in Bezug auf eine vordefinierte Stelle in einem obligatorischen Durchfahrtbereich (ZP1j, ZP2k) übertragen werden, bis es den obligatorischen Durchfahrtbereich (ZP1j, ZP2k), durch den die zu befolgende Bahn durchgeht, verlässt, damit es seine aktuelle Absolutposition ausgehend von jeder empfangenen relativen Position und einer Absolutposition der vordefinierten Stelle, die in den kartographischen Informationen enthalten ist, bestimmt.

6. Verfahren nach einem der Ansprüche 1 bis 5, **dadurch gekennzeichnet, dass** bei dem Schritt in dem Fahrzeug (V) aufeinanderfolgende Absolutpositionen dieses Letzteren (V) in Bezug auf eine vorbestimmte Stelle eines obligatorischen Durchfahrtbereichs (ZP1j, ZP2k) in Abhängigkeit von Entfernungen bestimmt werden, die aus Daten abgeleitet sind, die für die Umgebung vor dem Fahrzeug (V) repräsentativ werden, und die von Analysemitteln (MA) an Bord dieses Letzteren (V) bestimmt werden, damit es in jedem Augenblick über seine Absolutposition in Bezug auf eine Absolutposition der vordefinierten Stelle, die in den kartographischen Informationen enthalten ist, verfügt.

7. Verfahren nach einem der Ansprüche 1 bis 6, **dadurch gekennzeichnet, dass** bei dem Schritt von einem Rechner (CA), der mit dem Abschnitt (PV) assoziiert ist, zu dem Fahrzeug (V) ein Geschwindigkeitsprofil übertragen wird, das an jeden obligatorischen Durchfahrtbereich (ZP1j, ZP2k) angepasst ist, damit das Lenken des Fahrzeugs (V) auf der zu befolgenden Bahn unter Berücksichtigung des Geschwindigkeitsprofils, das an den obligatorischen Durchfahrtbereich (ZP1j, ZP2k), durch den diese zu befolgende Bahn durchgeht, angepasst ist, gesteuert wird.

8. Verfahren nach einem der Ansprüche 1 bis 7, **dadurch gekennzeichnet, dass** bei dem Schritt dem Fahrzeug (V) Zustandsdaten übertragen werden, die melden, ob die automatische Passage gestattet oder nicht gestattet ist, damit die Geschwindigkeit des Fahrzeugs (V) auf der zu befolgende Bahn in Abhängigkeit von diesen Zustandsdaten und von einer Position eines virtuellen Ziels, das sich in dem obligatorischen Durchfahrtbereich (ZP1j, ZP2k), durch den die zu befolgende Bahn durchgeht, befindet, gesteuert wird, wobei das Fahrzeug (V) genau vor dieser Position des virtuellen Ziels im Stillstand bleibt, solange die Zustandsdaten nicht für eine Genehmigung repräsentativ sind.

9. Verfahren nach einem der Ansprüche 1 bis 8, **dadurch gekennzeichnet, dass** jeder obligatorische Durchfahrtbereich (ZP1j, ZP2k) eine Mautstelle umfasst.

10. System, **dadurch gekennzeichnet, dass** es dazu bestimmt ist, ein Assistenzverfahren nach einem der vorstehenden Ansprüche umzusetzen, und dass es mindestens einen Rechner (CA) und ein erstes Kommunikationsmodul (MC1) umfasst, die in einem Abschnitt (PV) einer Fahrbahn (VC) installiert sind, die mindestens zwei obligatorische Durchfahrtzonen (ZP1j, ZP2k) umfasst, und mindestens ein Fahrzeug (V), das in dem Abschnitt (PV) anwesend ist und eine Assistenzvorrichtung (DA) umfasst, die mit dem Rechner (CA) zusammenwirkt, um das Lenken des Fahrzeugs (V) bei seiner Passage in einer obligatorischen Durchgangszone (ZP1j, ZP2k) zu steuern.

## Claims

1. A method to assist with driving of a vehicle (V) on a roadway (VC) comprising a portion (PV) provided with at least two force passage zones (ZP1j, ZP2k), said vehicle (V) communicating via radio waves and having a controlled driving in an autonomous manner as a function of its position, **characterized in that** it includes a step in which, when said vehicle (V) reaches the vicinity of said portion (PV), a relative position of said vehicle (V) is determined with respect to a predefined location of a force passage zone (ZP1j, ZP2k), then a path to follow is determined for said vehicle (V), passing through a force passage zone (ZP1j, ZP2k) as a function of cartographic information defining some of the force passage zones (ZP2k), traffic information defining traffic in some of the force passage zones (ZP1j, ZP2k), and said determined relative position, then the driving of said vehicle (V) is controlled so that it follows this path which is to be followed.

2. The method according to Claim 1, **characterized in that** in said step each relative position of said vehicle (V) and said path to be followed is determined in a computer (CA) associated with said portion (PV), then said definition of this path to be followed is transmitted from said computer (CA) to said vehicle (V) .

3. The method according to Claim 1, **characterized in that** in said step each position relative to said vehicle (V) and paths passing respectively through some of the force passage zones (ZP1j, ZP2k) are determined in a computer (CA) associated with said portion (PV), then there are transmitted from said computer (CA) to said vehicle (V) definitions of these determined paths, said cartographic information defining some of the force passage zones (ZP1j, ZP2k), said traffic information defining the traffic in some of the force passage zones (ZPj, ZP2k), and said position information defining each determined relative position, then in said vehicle (V) said path to be followed is selected from said determined paths, as a function of said cartographic information, said traffic information and said position information.

4. The method according to Claim 1, **characterized in that** in said step each relative position of said vehicle (V) is determined in a computer (CA) associated with said portion (PV), then there are transmitted from said computer (CA) to said vehicle (V) said cartographic information defining some of the force passage zones (ZP1j, ZP2k), said traffic information defining the traffic in some of the force passage zones (ZP1j, ZP2k), and said position information defining each determined relative position, then in said vehicle (V) said path to be followed is determined, passing through one of said force passage zones (ZP1j, ZP2k), as a function of said cartographic information, said traffic information and said position information.

5. The method according to one of Claims 1 to 4, **characterized in that** in said step there are transmitted from a computer (CA), associated with said portion (PV), to said vehicle (V) successive relative positions of the latter (V) with respect to a predefined location of a force passage zone (ZP1j, ZP2k), until it leaves the force passage zone (ZP1j, ZP2k) through which said path to be followed passes, so that it determines its absolute current position from each received relative position and an absolute position of said predefined location, contained in said cartographic information.

6. The method according to one of Claims 1 to 5, **characterized in that** in said step there are determined in said vehicle (V) successive absolute positions of the latter (V) with respect to a predefined location of a force passage zone (ZP1j, ZP2k) as a function of distances deduced from representative data of the environment in front of said vehicle (V) and determined by analysis means (MA) on-board in the latter (V), so that it has at its disposal at each moment its absolute position with respect to an absolute position of said predefined location, contained in said cartographic information.

7. The method according to one of Claims 1 to 6, **characterized in that** in said step there is transmitted from a computer (CA), associated with said portion (PV), towards said vehicle (V), a speed profile adapted to each force passage zone (ZP1j, ZP2k), so that the driving of said vehicle (V) is controlled over said path to be followed, respecting the speed profile adapted to the force passage zone (ZP1j, ZP2k) through which this path which is to be followed passes.

8. The method according to one of Claims 1 to 7, **characterized in that** in said step there are transmitted to said vehicle (V) status data indicating if said automatic passage is authorized or not authorized, so that the speed of said vehicle (V) is controlled over said path which is to be followed, as a function of these status data and a position of a virtual target situated in the force passage zone (ZP1j, ZP2k) through which said path which is to be followed passes, said vehicle (V) remaining stationary just before this position of said virtual target as long as said status data are not representative of an authorization.

9. The method according to one of Claims 1 to 8, **characterized in that** each force passage zone (ZP1j, ZP2k) includes a toll station.

10. A system, **characterized in that** it is intended to implement an assistance method according to one of the preceding claims, and that it includes at least one computer (CA) and a first communication module (MC1), installed in a portion (PV) of a roadway (VC) including at least two force passage zones (ZP1j, ZP2k), and at least one vehicle (V) present in said portion (PV) and comprising an assistance device (DA) cooperating with said computer (CA) for controlling the driving of said vehicle (V) during its passage in a force passage zone (ZP1j, ZP2k).
